# EUROPEAN PATENT SPECIFICATION

(11) **EP 3 577 405 B1**
(45) Date of publication and mention of the grant of the patent: **17.01.2024**
(21) Application number: 18704182.7
(22) Date of filing: 31.01.2018
(51) Int. Cl.: F28D 7/16, F01N 3/04, F28D 21/00, F28F 9/02

(54) **HEAT EXCHANGER FOR GASES, IN PARTICULAR FOR EXHAUST GASES FROM AN ENGINE, AND METHOD FOR MANUFACTURING SAME**
WÄRMETAUSCHER FÜR GASE, INSBESONDERE FÜR ABGASE EINES MOTORS UND VERFAHREN ZU DESSEN HERSTELLUNG
ÉCHANGEUR DE CHALUER POUR GAZ, EN PARTICULIERE POUR GAZ D'ÉCHAPPEMENT D'UN MOTEUR ET PROCÉDÉ POUR LA FABRICATION D'UN TEL ÉCHANGUER DE CHALEUR

(30) Priority: 31.01.2017 ES 201730110
(43) Date of publication of application: 11.12.2019
(73) Proprietor: Valeo Termico S.A., 50011 Zaragoza (ES)
(72) Inventor: JIMENEZ PALACIOS, Jésus, 50011 Zaragoza (ES); ROMERO PEREZ, Raul, 50011 Zaragoza (ES); URZAY EJEA, Serafin, 50011 Zaragoza (ES); PUERTOLAS SANCHEZ, Fernando, 50011 Zaragoza (ES)
(74) Representative: Valeo Systèmes Thermiques
(86) International application number: PCT/EP2018/052430
(87) International publication number: WO 2018/141808

(56) References cited:
- FR-A1- 2 772 875
- GB-A- 416 201
- US-A- 4 026 456
- US-A1- 2007 175 617
- US-A1- 2012 305 220
- US-B1- 6 899 169

## Description

### Technical section

The present invention concerns, in general and in a first aspect, a heat exchanger for gases, especially exhaust gases from an engine, that includes a tubular pipe attached to a part of same, and more specifically to a heat exchanger in which the tubular pipe is designed to be attached to said part by means of a projection therefrom.

A second aspect of the invention concerns a method for manufacturing the heat exchanger according to the first aspect.

The invention is used especially in exhaust gas recirculation coolers (EGRC) of an engine.

### Prior art

Heat exchangers for gases that include the characteristics of the preamble of Claim 1 of the present invention are known from the prior art, i.e. heat exchangers that include:
- a heat exchanger block that includes:
   - a first fluid circuit for the circulation of gases and a second fluid circuit for the circulation of a coolant fluid, in which the first and second fluid circuits are isolated fluidically from one another and arranged to effect a heat exchange between said gases and said coolant fluid.
   - at least one part that has a through-hole traversing two respective opposing surfaces of said at least one part, in which said through-hole is arranged such that said gases or said coolant fluid flow therethrough, and
- at least one tubular pipe joined to said at least one part such that same is in fluidic communication with said through-hole.

In general, such tubular pipes, in particular where same are inlet or outlet pipes for coolant fluid, are attached to the housing of the heat exchanger block by cold metal transfer (CMT) welding. This welding technique requires approximately 20 seconds to weld each join.

Furthermore, the use of the CMT welding technique requires there to be a space about the tubular pipes to be welded, to enable access for the welding torch. In certain specific designs of heat exchangers, it is very difficult to obtain said space to enable access for the torch to zones close to the ends of the pipes to be welded, due to the presence of other components arranged very close to the pipes.

In such cases, it would be beneficial to use other attachment techniques that do not require such access spaces on account of being applicable more or less remotely. This is the case of the technique known as remote laser welding, which enables welding operations to be performed remotely, obviating the need for the welding system to be close to the components to be welded, since the only access space required is a space enabling access for the laser beam, which is very small. For example, it is known that, with said remote welding technique, the laser welding head can be operated at a distance of between 420 and 470 mm from the components to be welded.

Most of the known designs of heat exchangers do not enable the use of such remote attachment techniques.

On the other hand, there are some proposals that enable the use of laser welding to attach pipes to other parts of the heat exchanger, such as those described in patent documents DE9319731U1, EP1518043B1, DE10255978A1 and DE10359911B3. US 2007/175617 A1 discloses a heat exchanger according to the preamble of claim 1.

Nonetheless, the proposals made in said patent documents have several different drawbacks, such as the need to insert the pipe into the hole in the part (DE9319731U1) or in a specific connector inserted therein (DE10255978A1), or the part in the tubular pipe (EP1518043B1, where the pipe would be the housing of the heat exchanger block), requiring substantial modifications to the part that could affect the structural strength thereof (DE10255978A1). Furthermore, in most of said proposals, the welding involves butt joins, which results in weld joins that are not strong as would be desirable.

It therefore appears necessary to provide an alternative to the prior art that provides a heat exchanger designed to enable the use of the aforementioned remote attachment techniques and that does not suffer from the drawbacks of the known exchangers in the prior art.

### Description of the invention

For this purpose, the first aspect of the present invention concerns a heat exchanger for gases according to claim 1, in particular for exhaust gases from an engine, that includes, in a known manner:
- a heat exchanger block that includes:
   - a first fluid circuit for the circulation of gases and a second fluid circuit for the circulation of a coolant fluid, in which the first and second fluid circuits are isolated fluidically from one another and arranged to effect a heat exchange between said gases and said coolant fluid.
   - at least one part that has a through-hole traversing two respective opposing surfaces of said at least one part, in which said through-hole is arranged such that said gases or said coolant fluid flow therethrough, and
- at least one tubular pipe joined to said at least one part such that same is in fluidic communication with said through-hole.

Unlike the heat exchangers known in the prior art, in the exchanger proposed according to the first aspect of the present invention, characteristically, the aforementioned at least one tubular pipe has at least one projection that extends radially outwards from one end of the at least one tubular pipe, and the aforementioned at least one projection is joined to a region of one of said two opposing surfaces that surrounds said through-hole.

Preferably, said join is not merely superficial but penetrates the part without passing entirely through the part.

According to the present invention, the projection is joined to said region of one of the two opposing surfaces by laser welding, preferably remotely.

The arrangement of said projection on the tubular pipe obviates the need for a butt join for said part, thereby increasing the contact zone, and therefore the join area, between the two, and is easier to access for a remote attachment system, such as one that uses the aforementioned remote welding technique.

Moreover, the projection acts as a stand for the tubular pipe on the surface of the part to which the part will be joined, before said join is carried out. According to a preferred example embodiment, said projection is a continuous perimeter flange. Alternatively, the exchanger according to the first aspect of the present invention includes a plurality of said projections arranged in the same plane and extending radially outwards from different angular positions of said end of the tubular pipe.

Preferably, at least one surface of the projection that is designed to come into contact with said region of one of the two opposing surfaces is substantially flat. Said region of one of the two opposing surfaces is preferably substantially flat.

According to the invention, the heat exchanger according to the first aspect of the present invention includes positioning means for positioning the tubular pipe in relation to said part, such that the projection is in contact with the region of one of the two opposing surfaces and is positioned such as to enable attachment thereto, and to the end of the tubular pipe from which the projection extends radially outwards includes the through-hole, i.e. covers same.

According to a the invention, said positioning means include matching shapes that are arranged respectively on the projection and in an area of one of the two opposing surfaces that is adjacent to said region, in which said matching shapes fit together to prevent the tubular pipe from moving in relation to the part along at least one plane parallel to a plane that includes said region.

According to the invention, said matching shapes include at least one recess and at least one protuberance arranged respectively on the projection and in the area of one of the two opposing surfaces that is adjacent to said region, or vice versa.

According to the invention, the matching shapes include two or more recesses that are distributed within a first plane and separated angularly from one another, and two or more corresponding protuberances that are distributed within a second plane and separated angularly from one another, in which the recesses and the protuberances are arranged respectively on the at least one projection and in said area of one of the two opposing surfaces that is adjacent to said region, or vice versa.

In general, the projection is an integral part of the tubular pipe, although alternatively the projection may be a separate element that is joined to the tubular pipe.

According to a preferred embodiment, the heat exchanger according to the first aspect of the present invention includes an inlet pipe and/or an outlet pipe for the coolant fluid, in which the at least one tubular pipe is at least one of said inlet and outlet pipes for the coolant fluid, and the heat exchanger block includes a housing that contains both of said first and second fluid circuits, in which at least one wall of the housing is the aforementioned at least one part.

Specifically, in the aforementioned preferred example embodiment, the inlet pipe and/or the outlet pipe for the coolant fluid is attached to the outer surface of the wall (or walls, if more than one pipe is attached) of the housing as explained above, i.e. attaching the projection or projections to the region surrounding the inlet and/or outlet through-hole (or through-holes) for the coolant fluid formed in said wall (or walls).

In the case described in the paragraph above, the tubular pipe is connected to the aforementioned second fluid circuit for the circulation of a coolant fluid.

For other example embodiments, the tubular pipe is different from the tubular pipe indicated in the aforementioned preferred example embodiment, such as a pipe (or more than one pipe) that is part of either one of the aforementioned first and second fluid circuits, or a pipe connected to any one of same. For such example embodiments, the aforementioned part is a wall of the housing or of any other element that is part of the heat exchanger block (or even an element coupled thereto).

In one of such example embodiments, the pipe is one or each pipe for carrying gases from a bundle of parallel pipes (of the first fluid circuit) and the part is a support plate attached to one end of the housing to which the aforementioned pipes for carrying gases are attached.

In another of such example embodiments, the tubular pipe is the housing itself, having a hollow cylinder or prism shape, and the part is a support plate between two of which the housing is attached by the respective opposing ends thereof.

The present invention also concerns, according to a second aspect, a method for manufacturing a heat exchanger for gases according to the first aspect, that includes carrying out the following steps sequentially:
a) positioning the at least one tubular pipe in relation to the at least one part, such that the at least one projection is in contact with said region of one of the two opposing surfaces and is positioned such as to enable attachment thereto, and the end of the tubular pipe from which the at least one projection extends radially outwards contains the through-hole, and
b) attaching the at least one projection to the region of one of the two opposing surfaces.

In the method according to the second aspect of the present invention, the aforementioned step a) is carried out using the positioning means described above in relation to the first aspect of the present invention.

In the method according to the second aspect of the present invention, the aforementioned step b) is carried out by laser welding.

### Short description of the figures

The aforementioned and other advantages and characteristics can be more fully understood from the following detailed description of some example embodiments with reference to the attached drawings, which are illustrative and non-limiting, in which:
Figure 1 is a perspective view showing the proposed heat exchanger according to the first aspects of the present invention for an example of embodiment in which the heat exchanger includes an inlet or outlet pipe for coolant fluid that is welded to the outer surface of a wall of the housing of the exchanger,
Figure 2 is a magnified detail of a cross section of part of Figure 1, in particular the tubular pipe and a portion of the outer wall of the housing to which same is welded,
Figures 3A and 3B are magnified views of details A and B respectively shown in Figure 2.

### Detailed description of some example embodiments

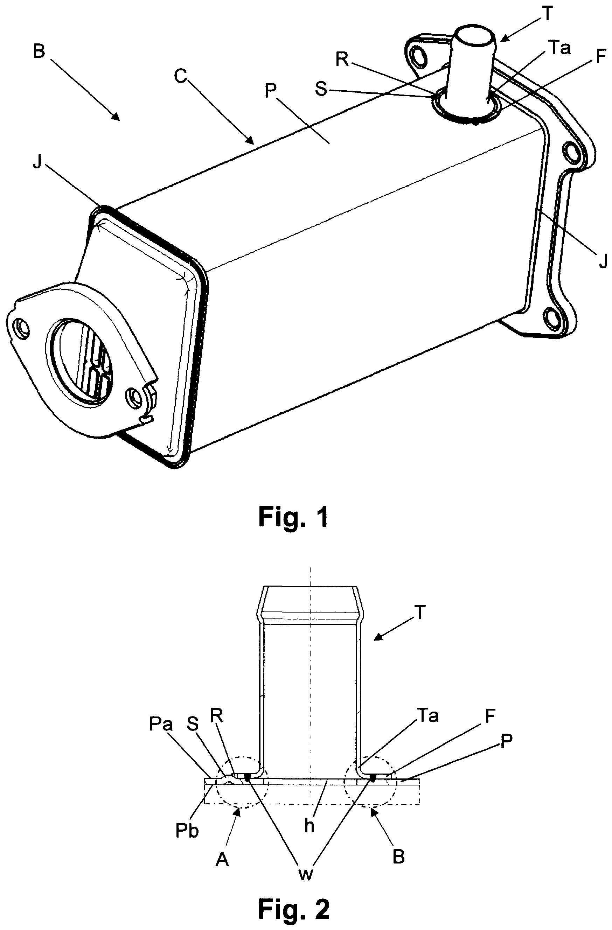

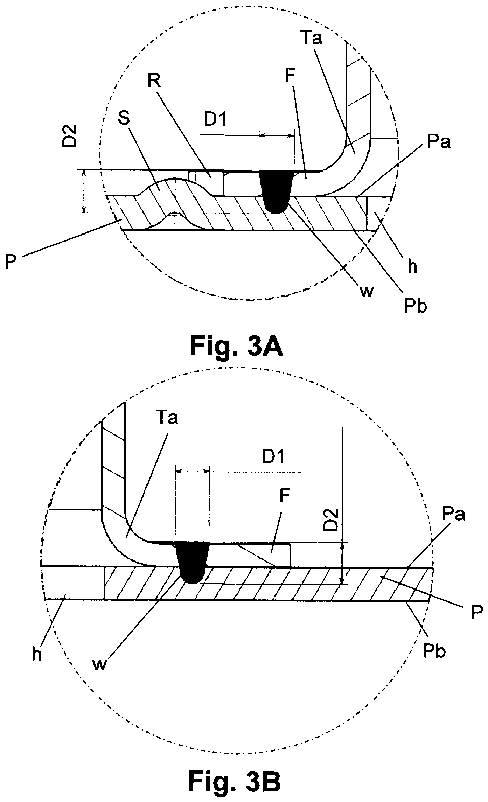

The attached figures show an example embodiment of the heat exchanger for gases according to the first aspect of the invention in which said heat exchanger includes, as shown in figure 1, a heat exchanger block B that includes a housing C that contains a first fluid circuit for the circulation of gases and a second fluid circuit for the circulation of a coolant fluid, in which the first and second fluid circuits are isolated fluidically from one another and arranged to effect an exchange of heat between the gases and the coolant fluid, in which the housing C includes a wall that is the aforementioned part P that has a through-hole h (see Figures 2, 3A and 3B) that passes through two respective opposing surfaces Pa, Pb (see Figures 3A and 3B) thereof.

Although not shown in the figures, the through-hole h is arranged so that, in this case, the coolant fluid flows therethrough, i.e. same is connected to the second fluid circuit.

The heat exchanger block B also includes an inlet pipe T for coolant fluid (and an outlet pipe, not shown) that is joined to the wall P of the housing C such that same is in fluidic communication with the through-hole h, i.e. same is connected to the second fluid circuit.

As shown in the attached figures, the tubular pipe T includes a projection F in the form of a continuous perimeter flange that extends radially outwards from one end Ta of the tubular pipe T.

Preferably, the outlet pipe for the coolant fluid (not shown) is also shaped and attached to a wall of the housing C in a manner similar to the inlet pipe, i.e. by means of a corresponding projection.

Moreover, in another example embodiment, and as an alternative or in addition to that described with reference to the inlet pipe for coolant fluid, the housing C itself is a tubular pipe that includes a projection (not shown) at one or both ends thereof, that is shaped and joined to a respective support plate J according to the present invention.

The projection F is joined by laser welding, to a region of one of the two opposing surfaces Pa, Pb that surrounds the through-hole h, in particular to the outer surface Pa, although, as shown in Figures 3A and 3B, the join is not merely superficial, but the weld seam w penetrates some of the thickness of the wall P, without passing through same completely.

As shown in the attached figures, in particular Figures 3A and 3B, both the surface of the projection F that is designed to come into contact with the region of the surface Pa that surrounds the hole h and said region are substantially flat.

The figures also show how the heat exchanger according to the first aspect of the present invention includes positioning means for positioning the tubular pipe T in relation to the wall P of the housing C, such that the projection F is in contact with the region of the surface Pa that surrounds the through-hole h, and is positioned such as to enable attachment thereto, and the end Ta of the tubular pipe T includes the through-hole h.

Said positioning means have matching shapes that in turn have two or more recesses R that are distributed within a first plane and separated angularly from one another, and two or more corresponding protuberances S that are distributed within a second plane and separated angularly from one another, in which, as shown in Figure 1, the recesses R are arranged at different points of the perimeter edge that forms the projection F and the protuberances S in an area of the surface Pa that is adjacent to the aforementioned region to which the projection F is attached. In this case, and although Figure 1 only shows two recesses R and two respective protuberances S, there are three recesses R and three respective protuberances S (although one of each one thereof is hidden by the tubular pipe T in Figure 1), separated by an angle of 120° from one another.

Figure 3A shows how the protuberance S shown is formed by stamping, deforming a zone of the wall P. However, in other embodiments (not shown), the protuberance S is obtained without deforming the wall P, either by adding same as an integral part of the housing when the housing C is manufactured, or in the form of a separate element attached to the wall P.

When positioning the tubular pipe T, the protuberances S fit into the recesses R such as to prevent the movement of the tubular pipe T in relation to the wall P of the housing C in a plane parallel to a plane that includes the region in which the projection F is attached, i.e. in a plane parallel to the wall P. This enables remote laser welding to be carried out without moving the tubular pipe T.

However, if there is a small movement of the tubular pipe T or said pipe is not perfectly positioned (for example if there is some play between each recess R and each protuberance S), the design of the exchanger according to the first aspect of the present invention, in particular of the projection F and of the wall P, enable said small movements or variations in the positioning of the parts to be welded to be absorbed, and as such the related attachment method can be considered to be robust.

This remote welding attachment method enables the achievement of optimum working cycles of just 2.5 seconds to fully weld each tubular pipe T to the wall P, which results in a very significant reduction in processing costs in comparison to conventional solutions.

Furthermore and as shown in Figures 3A and 3B, the weld seam w completely penetrates the projection F, passing completely through same, and therefore any play between same and the surface Pa is completely absorbed, i.e. the two parts are perfectly welded, even if the surfaces in contact are not entirely flat and/or parallel.

Figures 3A and 3B show two measurements D1 and D2 relating to the width and depth of the weld seam w respectively, which are adjustable as a function of the intended design of the exchanger, in particular the mandatory technical specifications or operational requirements applicable thereto. In any case, said figures show how the weld seam w passes through the entire thickness of the projection F and some of the thickness of the wall P (approximately half in the example embodiment shown), which ensures a very good join that is much stronger than the butt joins in the prior art.

Moreover, the tubular pipe T is simpler to manufacture than standard pipes and requires the use of less material, because firstly the pipe can be shorter since there is no need for an end portion to penetrate the through-hole of the part P, and secondly because it is not the main body of the pipe but the projection F that is welded.

Furthermore, the manufacture of the proposed exchanger according to the first aspect of the present invention, using the method in the second aspect, is easy to integrate into an automatic welding process, the design is less costly than conventional designs, and the cost of processing and the cost related to the working cycle is significantly lower than conventional solutions.

A person skilled in the art could make changes and modifications to the example embodiments described without thereby moving outside the scope of the invention, as defined in the attached claims.

## Claims

1. Heat exchanger for gases, in particular for exhaust gases from an engine, that includes:
- a heat exchanger block (B) that includes:
- a first fluid circuit for the circulation of gases and a second fluid circuit for the circulation of a coolant fluid, in which the first and second fluid circuits are isolated fluidically from one another and arranged to effect a heat exchange between said gases and said coolant fluid.
- at least one part (P) that has a through-hole (h) traversing two respective opposing surfaces (Pa, Pb) of said at least one part (P), in which said through-hole (h) is arranged such that said gases or said coolant fluid flow therethrough, and
- at least one tubular pipe (T) joined to said at least one part (P) such that same is in fluidic communication with said through-hole (h),
wherein said at least one tubular pipe (T) has at least one projection (F) that extends radially outwards from one end (Ta) of the at least one tubular pipe (T), and wherein said at least one projection (F) is joined to the at least one region of one of said two opposing surfaces (Pa, Pb) surrounding said through-hole (h), **characterized in that** the at least one projection (F) is joined to said region of one of the two opposing surfaces (Pa, Pb) by laser welding, said heat exchanger including positioning means for positioning said at least one tubular pipe (T) in relation to said at least one part (P), such that the at least one projection (F) is in contact with said region of one of said two opposing surfaces (Pa, Pb) and is positioned such as to enable attachment thereto, and the end (Ta) of the tubular pipe (T) from which the at least one projection (F) extends radially outwards contains the through-hole (h), in which said positioning means include matching shapes that are arranged respectively on the at least one projection (F) and in an area of one of the two opposing surfaces (Pa, Pb) that is adjacent to said region, in which said matching shapes fit together to prevent the at least one tubular pipe (T) from moving in relation to the at least one part (P) along at least one plane parallel to a plane that includes said region, in which said matching shapes include at least one recess (R) and at least one protuberance (S) arranged respectively on the at least one projection (F) and in said area of one of the two opposing surfaces (Pa, Pb) that is adjacent to said region, or vice versa, in which the matching shapes include two or more recesses (R) that are distributed within a first plane and separated angularly from one another, and two or more corresponding protuberances (S) that are distributed within a second plane and separated angularly from one another, in which the recesses (R) and the protuberances (S) are arranged respectively on the at least one projection (F) and in said area of one of the two opposing surfaces (Pa, Pb) that is adjacent to said region, or vice versa.

2. Heat exchanger according to Claim 1, in which said at least one projection (F) is a continuous perimeter flange.

3. Heat exchanger according to Claim 1, including a plurality of said at least one projections (F) that are arranged in the same plane and that extend radially outwards from different angular positions of said end (Ta) of the at least one tubular pipe (T).

4. Heat exchanger according to any one of the preceding claims, in which the at least one surface of said at least one projection (F) that is designed to come into contact with said region of one of said two opposing surfaces (Pa, Pb) is substantially flat.

5. Heat exchanger according to any one of the preceding claims, in which at least said region of one of said two opposing surfaces (Pa, Pb) is substantially flat.

6. Heat exchanger according to any one of the preceding claims, in which said at least one projection (F) is an integral part of said at least one tubular pipe (T).

7. Heat exchanger according to any one of Claims 1 to 5, in which said at least one projection (F) is a separate element that is joined to said at least one tubular pipe (T) .

8. Heat exchanger according to any one of the preceding claims, including an inlet pipe and/or an outlet pipe for said coolant fluid, in which said at least one tubular pipe (T) is at least one of said inlet and outlet pipes for said coolant fluid, and in which said heat exchanger block (B) includes a housing (C) that contains both of said first and second fluid circuits, in which at least one wall of said housing (C) is said at least one part (P) .

9. Method for manufacturing a heat exchanger for gases according to any of the preceding claims, that involves performing the following steps sequentially:
a) positioning said at least one tubular pipe (T) in relation to said at least one part (P), such that the at least one projection (F) is in contact with said region of one of said two opposing surfaces (Pa, Pb) and is positioned such as to enable attachment thereto, and the end (Ta) of the tubular pipe (T) from which the at least one projection (F) extends radially outwards contains the through-hole (h), and
b) attaching the at least one projection (F) to said region of one of the two opposing surfaces (Pa, Pb) by laser welding
and in which said step a) is performed using the positioning means according to claim 1.

## Patentansprüche

1. Wärmetauscher für Gase, insbesondere für Abgase eines Motors, einschließlich:
- eines Wärmetauscherblocks (B), einschließlich:
- eines ersten Fluidkreislaufs zur Zirkulation von Gasen und eines zweiten Fluidkreislaufs zur Zirkulation eines Kühlmittelfluids, wobei der erste und der zweite Fluidkreislauf fluidisch voneinander isoliert und so angeordnet sind, dass ein Wärmeaustausch zwischen den Gasen und dem Kühlmittelfluid erfolgt,
- mindestens eines Teils (P), das ein Durchgangsloch (h) aufweist, das zwei einander gegenüberliegende Oberflächen (Pa, Pb) des mindestens einen Teils (P) durchquert, wobei das Durchgangsloch (h) so angeordnet ist, dass die Gase oder das Kühlmittelfluid durch dieses strömen, und
- mindestens eines röhrenförmigen Rohrs (T), das mit dem mindestens einen Teil (P) verbunden ist, sodass dieses in Fluidverbindung mit dem Durchgangsloch (h) steht,
wobei das mindestens eine röhrenförmige Rohr (T) mindestens einen Vorsprung (F) aufweist, der sich von einem Ende (Ta) des mindestens einen röhrenförmigen Rohrs (T) radial nach außen erstreckt, und wobei der mindestens eine Vorsprung (F) mit der mindestens einen Region einer der beiden einander gegenüberliegenden Oberflächen (Pa, Pb) verbunden ist, der das Durchgangsloch (h) umgibt, **dadurch gekennzeichnet, dass** der mindestens eine Vorsprung (F) durch Laserschweißen mit der Region einer der beiden einander gegenüberliegenden Oberflächen (Pa, Pb) verbunden ist, wobei der Wärmetauscher Positionierungsmittel zum Positionieren des mindestens einen röhrenförmigen Rohrs (T) in Bezug auf das mindestens eine Teil (P) umfasst, sodass der mindestens eine Vorsprung (F) in Kontakt mit der Region einer der beiden einander gegenüberliegenden Oberflächen (Pa, Pb) steht und so positioniert ist, dass eine Befestigung daran möglich ist, und das Ende (Ta) des röhrenförmigen Rohrs (T), von dem sich der mindestens eine Vorsprung (F) aus radial nach außen erstreckt, das Durchgangsloch (h) enthält, in dem die Positionierungsmittel passende Formen aufweisen, die auf dem mindestens einen Vorsprung (F) beziehungsweise in einem an diese Region angrenzenden Bereich einer der beiden einander gegenüberliegenden Oberflächen (Pa, Pb) angeordnet sind, wobei die passenden Formen zusammenpassen, um zu verhindern, dass sich das mindestens eine röhrenförmige Rohr (T) in Bezug auf das mindestens eine Teil (P) entlang mindestens einer Ebene parallel zu einer Ebene bewegt, die die Region enthält, wobei die passenden Formen mindestens eine Vertiefung (R) und mindestens eine Ausstülpung (S) einschließen, die auf dem mindestens einen Vorsprung (F) beziehungsweise in dem an diese Region angrenzenden Bereich einer der beiden einander gegenüberliegenden Oberflächen (Pa, Pb) angeordnet sind, oder andersherum, wobei die passenden Formen zwei oder mehr Vertiefungen (R), die innerhalb einer ersten Ebene verteilt und winkelmäßig voneinander getrennt sind, und zwei oder mehr entsprechende Ausstülpungen (S), die innerhalb einer zweiten Ebene verteilt und winkelmäßig voneinander getrennt sind, einschließen, wobei die Vertiefungen (R) und die Ausstülpungen (S) auf dem mindestens einen Vorsprung (F) beziehungsweise in dem an diese Region angrenzenden Bereich einer der beiden einander gegenüberliegenden Oberflächen (Pa, Pb) angeordnet sind, oder andersherum.

2. Wärmetauscher nach Anspruch 1, bei dem der mindestens eine Vorsprung (F) ein durchgehender Umfangsflansch ist.

3. Wärmetauscher nach Anspruch 1, umfassend eine Vielzahl der mindestens einen Vorsprünge (F), die in derselben Ebene angeordnet sind und sich von unterschiedlichen Winkelpositionen des Endes (Ta) des mindestens einen röhrenförmigen Rohrs (T) aus radial nach außen erstrecken.

4. Wärmetauscher nach einem der vorhergehenden Ansprüche, wobei die mindestens eine Oberfläche des mindestens einen Vorsprungs (F), die so gestaltet ist, dass sie mit der Region einer der beiden einander gegenüberliegenden Oberflächen (Pa, Pb) in Kontakt kommt, im Wesentlichen flach ist.

5. Wärmetauscher nach einem der vorhergehenden Ansprüche, wobei die mindestens eine Region einer der beiden einander gegenüberliegenden Oberflächen (Pa, Pb) im Wesentlichen flach ist.

6. Wärmetauscher nach einem der vorhergehenden Ansprüche, wobei der mindestens eine Vorsprung (F) einstückig mit dem mindestens einen röhrenförmigen Rohr (T) ausgebildet ist.

7. Wärmetauscher nach einem der Ansprüche 1 bis 5, wobei der mindestens eine Vorsprung (F) ein separates Element ist, das mit dem mindestens einen röhrenförmigen Rohr (T) verbunden wird.

8. Wärmetauscher nach einem der vorhergehenden Ansprüche, einschließlich eines Einlassrohrs und/oder eines Auslassrohrs für das Kühlmittelfluid, wobei das mindestens eine röhrenförmige Rohr (T) mindestens eines des Einlass- und des Auslassrohrs für das Kühlmittelfluid ist und wobei der Wärmetauscherblock (B) ein Gehäuse (C) umfasst, das sowohl den ersten als auch den zweiten Fluidkreislauf enthält, wobei mindestens eine Wand des Gehäuses (C) das mindestens eine Teil (P).

9. Verfahren zum Fertigen eines Wärmetauschers für Gase nach einem der vorhergehenden Ansprüche, welches das Ausführen der folgenden Schritte nacheinander einschließt:
a) Positionieren des mindestens einen röhrenförmigen Rohrs (T) in Bezug auf das mindestens eine Teil (P), sodass der mindestens eine Vorsprung (F) in Kontakt mit der Region einer der beiden einander gegenüberliegenden Oberflächen (Pa, Pb) steht und so positioniert ist, dass eine Befestigung daran möglich ist, und das Ende (Ta) des röhrenförmigen Rohrs (T), von dem sich der mindestens eine Vorsprung (F) aus radial nach außen erstreckt, das Durchgangsloch (h) enthält, und
b) Befestigen des mindestens einen Vorsprungs (F) durch Laserschweißen mit der Region einer der beiden einander gegenüberliegenden Oberflächen (Pa, Pb),
und wobei Schritt a) unter Verwendung der Positionierungsmittel gemäß Anspruch 1 durchgeführt wird.

## Revendications

1. Échangeur de chaleur pour des gaz, en particulier pour des gaz d'échappement provenant d'un moteur, qui inclut :
- un bloc d'échangeur de chaleur (B) qui inclut :
- un premier circuit de fluide pour la circulation de gaz et un second circuit de fluide pour la circulation d'un fluide de refroidissement, dans lequel les premier et second circuits de fluide sont fluidiquement isolés l'un de l'autre et agencés pour effectuer un échange de chaleur entre lesdits gaz et ledit fluide de refroidissement,
- au moins une partie (P) qui a un trou débouchant (h) traversant deux surfaces opposées respectives (Pa, Pb) de ladite au moins une partie (P), dans lequel ledit trou débouchant (h) est agencé de telle sorte que lesdits gaz ou ledit fluide de refroidissement s'écoulent à travers celui-ci, et
- au moins un tuyau tubulaire (T) joint à ladite au moins une partie (P) de telle sorte que celle-ci soit en communication fluidique avec ledit trou débouchant (h),
dans lequel ledit au moins un tuyau tubulaire (T) a au moins une saillie (F) qui s'étend radialement vers l'extérieur depuis une extrémité (Ta) de l'au moins un tuyau tubulaire (T), et dans lequel ladite au moins une saillie (F) est jointe à l'au moins une région d'une desdites deux surfaces opposées (Pa, Pb) entourant ledit trou débouchant (h), **caractérisé en ce que** l'au moins une saillie (F) est jointe à ladite région d'une des deux surfaces opposées (Pa, Pb) par soudage au laser, ledit échangeur de chaleur incluant des moyens de positionnement pour positionner ledit au moins un tuyau tubulaire (T) par rapport à ladite au moins une partie (P), de telle sorte que l'au moins une saillie (F) soit en contact avec ladite région d'une desdites deux surfaces opposées (Pa, Pb) et soit positionnée de manière telle à permettre la fixation à celle-ci, et l'extrémité (Ta) du tuyau tubulaire (T), depuis laquelle l'au moins une saillie (F) s'étend radialement vers l'extérieur, contienne le trou débouchant (h), dans lequel lesdits moyens de positionnement incluent des formes assorties qui sont agencées respectivement sur l'au moins une saillie (F) et dans une zone d'une des deux surfaces opposées (Pa, Pb) qui est adjacente à ladite région, dans lequel lesdites formes assorties s'ajustent ensemble pour empêcher l'au moins un tuyau tubulaire (T) de se déplacer par rapport à l'au moins une partie (P) le long d'au moins un plan parallèle à un plan qui inclut ladite région, dans lequel lesdites formes assorties incluent au moins un évidement (R) et au moins une protubérance (S) agencée respectivement sur l'au moins une saillie (F) et dans ladite zone d'une des deux surfaces opposées (Pa, Pb) qui est adjacente à ladite région, ou vice versa, dans lequel les formes assorties incluent deux, ou plus, évidements (R) qui sont distribués dans un premier plan et séparés angulairement l'un de l'autre ou les uns des autres, et deux, ou plus, protubérances correspondantes (S) qui sont distribuées dans un second plan et séparées angulairement l'une de l'autre ou les unes des autres, dans lequel les évidements (R) et les protubérances (S) sont agencés respectivement sur l'au moins une saillie (F) et dans ladite zone d'une des deux surfaces opposées (Pa, Pb) qui est adjacente à ladite région, ou vice versa.

2. Échangeur de chaleur selon la revendication 1, dans lequel ladite au moins une saillie (F) est une bride périmétrique continue.

3. Échangeur de chaleur selon la revendication 1, incluant une pluralité de ladite au moins une saillie (F), qui sont agencées dans le même plan et qui s'étendent radialement vers l'extérieur depuis différentes positions angulaires de ladite extrémité (Ta) de l'au moins un tuyau tubulaire (T).

4. Échangeur de chaleur selon l'une quelconque des revendications précédentes, dans lequel l'au moins une surface de ladite au moins une saillie (F) qui est conçue pour entrer en contact avec ladite région d'une desdites deux surfaces opposées (Pa, Pb) est sensiblement plate.

5. Échangeur de chaleur selon l'une quelconque des revendications précédentes, dans lequel au moins ladite région d'une desdites deux surfaces opposées (Pa, Pb) est sensiblement plate.

6. Échangeur de chaleur selon l'une quelconque des revendications précédentes, dans lequel ladite au moins une saillie (F) est une partie intégrante dudit au moins un tuyau tubulaire (T).

7. Échangeur de chaleur selon l'une quelconque des revendications 1 à 5, dans lequel ladite au moins une saillie (F) est un élément séparé qui est joint audit au moins un tuyau tubulaire (T).

8. Échangeur de chaleur selon l'une quelconque des revendications précédentes, incluant un tuyau d'entrée et/ou un tuyau de sortie pour ledit fluide de refroidissement, dans lequel ledit au moins un tuyau tubulaire (T) est au moins un desdits tuyaux d'entrée et de sortie pour ledit fluide de refroidissement, et dans lequel ledit bloc d'échangeur de chaleur (B) inclut un logement (C) qui contient les deux desdits premier et second circuits de fluide, dans lequel au moins une paroi dudit logement (C) est ladite au moins une partie (P).

9. Procédé pour fabriquer un échangeur de chaleur pour gaz selon l'une quelconque des revendications précédentes, qui comprend la réalisation séquentielle des étapes suivantes :
a) le positionnement dudit au moins un tuyau tubulaire (T) par rapport à ladite au moins une partie (P), de telle sorte que l'au moins une saillie (F) soit en contact avec ladite région d'une desdites deux surfaces opposées (Pa, Pb) et soit positionnée de manière telle à permettre la fixation à celle-ci, et l'extrémité (Ta) du tuyau tubulaire (T), depuis laquelle l'au moins une saillie (F) s'étend radialement vers l'extérieur, contienne le trou débouchant (h), et
b) la fixation de l'au moins une saillie (F) à ladite région d'une des deux surfaces opposées (Pa, Pb) par soudage au laser,
et dans lequel ladite étape a) est réalisée en utilisant les moyens de positionnement selon la revendication 1.
